# EUROPEAN PATENT APPLICATION

(11) **EP 4 847 422 A1**
(43) Date of publication of application: **02.12.2026**
(21) Application number: 26180185.6
(22) Date of filing: 21.05.2026
(51) Int. Cl.: B65G 17/38, B65G 17/08

(54) **MATERIAL HANDLING CHAIN AND HANDLING DEVICE COMPRISING SAID CHAIN**

(30) Priority: 28.05.2025 IT 202500002353 U
(71) Applicant: M.H. Material Handling S.p.A., 20826 Misinto (MB) (IT)
(72) Inventor: FONTANA, Luca Francesco Giuseppe, 20826 MISINTO (MB) (IT); GASTRONI, Romano, 20826 MISINTO (MB) (IT)
(74) Representative: Studio Torta S.p.A.

(57) **Abstract**

A closed-loop chain for handling material along a moving direction D comprising:
• a plurality of cardan-type joints (12);
• a plurality of links (10), each comprising:
- an articulation portion (14), configured to be coupled to the respective articulation portions (14) of the adjacent links (10) by means of respective cardan-type joints (12); and
- a support portion (15), which is integral to the respective articulation portion (14) and is configured to define a planar surface (16) for supporting the material (2) to be handled;

each articulation portion (14) extending along a longitudinal axis (A) and comprising a head (17) and a tail (18), which laterally protrudes with respect to the head (17) and defines an inner housing seat (26) shaped so as to house the head (17) of the articulation portion (14) of the adjacent link (10); the tail (18) being shaped so as to define two lateral sides (28) substantially transverse to the planar surface (16) of the support portion (15); each lateral side (28) being shaped so as to define a first and a second abutment face (29a, 29b) configured to cooperate, in use, with a tooth of a sprocket (5; 8) of a handling device (1).

## Description

### Cross-reference to related applications

This patent application claims priority from Italian utility model no. 202025000002353 filed on May 28, 2025, the entire disclosure of which is incorporated herein by reference.

### Technical field

The invention relates to a material handling chain. The invention also relates to a handling device for an automated plant.

The technical field of reference of this invention relates to chains and devices for handling material in the industrial sector. In other words, invention is part of the technical field of industrial transport systems and, more generally, of mechanics applied to industrial automation.

### Background

As it is known, there are different types of chains for the transport of material in the industrial field.
A type of chain for transporting material, often referred to as "slat conveyor chain", comprises a plurality of links connected to one another, each provided with a respective flat wing, also known as support portion. The wings are shaped so as to respectively define a planar surface for supporting the material to be handled; when the links are coupled together, the wings define a transport plane. The shape of the wings and, in use, the distance between one wing and the other may vary depending on the application and the type of material to be transported.

The links of the chain are normally shaped so as to be able to mesh with at least two toothed sprockets of a handling device.

These chains are used on straight and/or curved paths and are widely used for handling material of any type, such as containers, parts and components in industrial production and assembly lines, in packaging lines for all types of products, etc..

Sometimes, the chains can be placed side by side to convey material having a dimensions exceeding the width (understood as a dimension transverse to the moving direction) of the wing of one single chain.

Chains of this type, however, often suffer from some drawbacks.

For example, the meshing with the sprockets is not always reliable and suitable for an operation of the chain in two directions. Furthermore, the presence of excessive coupling clearance between one link and the other of the chain can lead to impacts between the links of the chain, resulting in an increase in noise, especially as the operating speed of the chain increases, and in a reduction in the mechanical capacity of the chain to withstand stresses.

Therefore, an object of the invention is to provide a material handling chain which is not affected by the aforementioned drawbacks of the prior art; in particular, an object of the invention is to provide a chain that is reliable and, at the same time, low-noise and overcomes the aforesaid drawbacks in a simple and economic fashion, both from the functional point of view and from the constructive point of view.

### Description of the innovation

In accordance with these objects, the invention relates to a material handling chain as claimed in claim 1.

A further object of the invention is to provide a material handling device that is reliable and features reduced noise compared to prior art solutions.

In accordance with these objects, the invention also relates to a material handling device as claimed in claim 14.

### Brief description of the drawings

Further features and advantages of the invention will be best understood upon perusal of the following description of a non-limiting embodiment thereof, with reference to the accompanying drawing, wherein:
- figure 1 is a schematic representation of a material handling device according to the invention in a first configuration;
- figure 2 is a schematic representation of a material handling device according to the invention in a second configuration;
- figure 3 is a schematic representation from above of a chain according to the invention, with parts removed for greater clarity;
- figure 4 is a schematic view from the bottom of the chain of figure 3, with parts removed for greater clarity;
- figure 5 is a schematic perspective view of a detail of the chain of figure 4;
- figure 6 is a perspective view of the chain of figure 3, with parts removed for greater clarity;
- figure 7 is a schematic representation, with cross-sectional parts and parts removed for greater clarity, of the material handling device according to the invention in a radial meshing operating configuration;
- figure 8 is a schematic representation, with parts removed for greater clarity, of the material handling device according to the invention in a tangential meshing operating configuration.

### Description of an embodiment of the invention

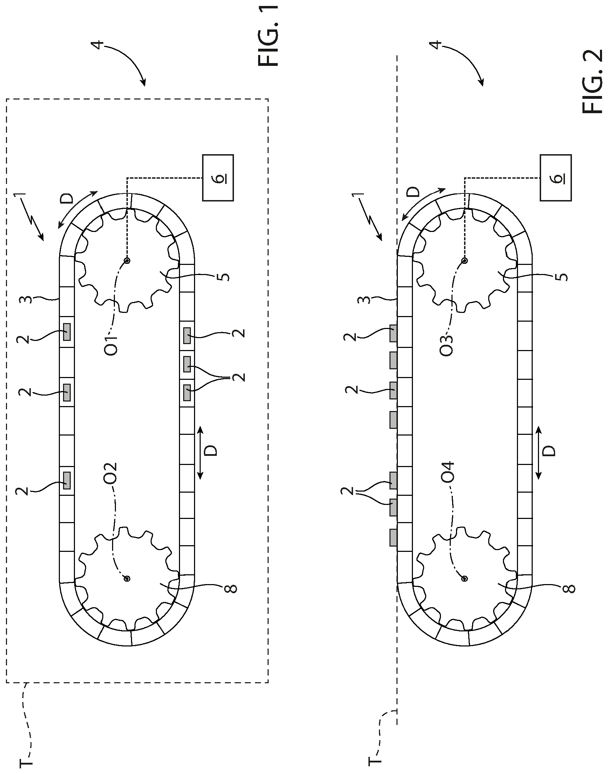

In figure 1, reference number 1 indicates a device for handling material 2 (schematically shown), which comprises a closed-loop chain 3 moved by a moving system 4 to define a conveyor belt.

In the example of figure 1, the moving system 4 comprises at least one driving sprocket 5 rotating around a rotation axis O1 and coupled to a motor 6 (schematically shown in figure 1) and at least one idle sprocket 8 rotating around a rotation axis O2 and configured to guide the chain 3 and keep it under tension. The driving sprocket 5 and the idle sprocket 8 mesh with the chain 3 tangentially. In other words, the peripheral teeth of the driving sprocket 5 and of the idle sprocket 8 are coupled to the chain 3 tangentially to the moving direction D of the chain 3.

The rotation axes O1 and O2 are therefore orthogonal to the moving direction D and to the transport plane T defined by the chain 3.

Figure 2 shows a second example of a material handling device 1, in which the moving device 4 comprises a driving sprocket 5 and an idle sprocket 8, which mesh with the chain 3 radially. In other words, the peripheral teeth of the driving sprocket 5 and of the idle sprocket 8 are coupled to the chain 3 in an orthogonal direction with respect to the transport plane T defined by the chain 3.

In this configuration, the rotation axis O3 of the driving sprocket 5 and the rotation axis O4 of the idle sprocket 8 are parallel to the transport plane T defined by the chain 3.

It is understood that the configurations shown in figures 1 and 2 are purely exemplary and are intended to schematically illustrate the two different types of coupling between driving sprocket 5/ chain 3 and/or between idle sprocket 8 / chain 3, which will be discussed in detail below. According to a variant, the idle sprocket of the configurations of figures 1 and 2 is not toothed.

As shown in figures 1 and 2, the moving direction D substantially indicates the path followed by the chain 3 along its closed-loop development and can comprise straight segments and/or curved segments. The moving direction is not relevant for the purposes of the description. Therefore, the moving direction D is represented by a two-headed arrow, indicative of both directions of travel along the path of the chain 3.

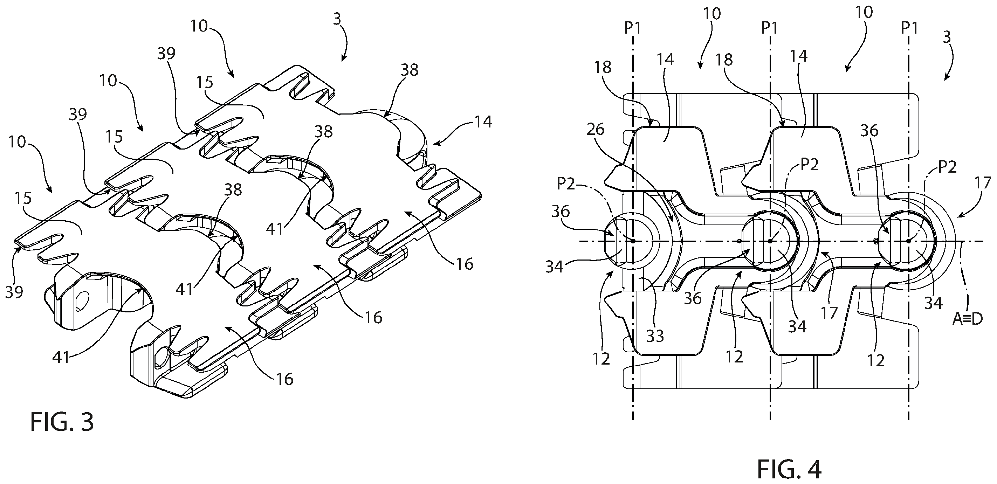

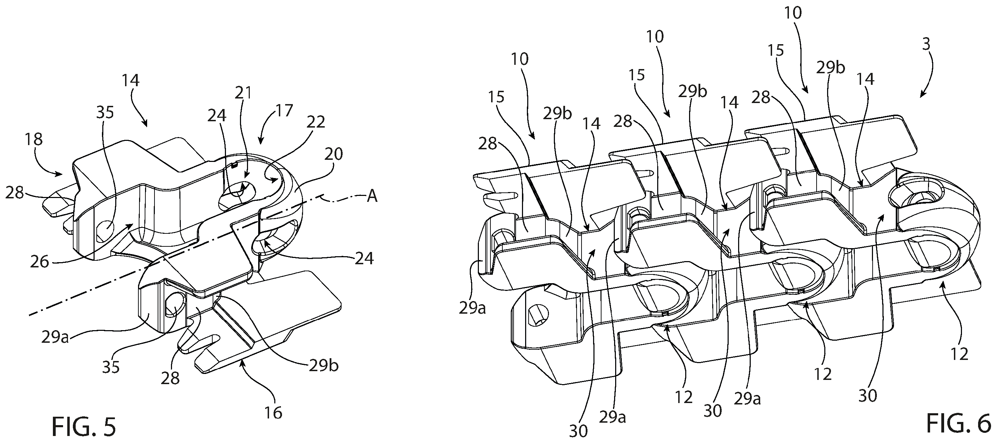

With reference to figures 3-5, which show portions of the chain 3 according to the invention, the chain 3 comprises a plurality of links 10 articulated to one another by means of cardan-type joints 12 (better visible in figures 4 and 5).

Each link 10 comprises an articulation portion 14 (better visible in figures 4 and 5) and a support portion 15, integral to the articulation portion 14 and configured to form a planar surface 16 (better visible in figure 3) designed to support the material 2 to be handled (not visible in figures 3-5). The planar surface 16 of the links 10 coupled to one another substantially defines the transport plane T of the chain 3.

With particular reference to figure 4 and figure 5, each articulation portion 14 extends along a longitudinal axis A. In use, the longitudinal axis A substantially coincides with the moving direction D.

Each articulation portion 14 comprises a head 17 and a tail 18.

The head 17 is provided with an outer surface 20, which preferably is spherical, and with an inner seat 21, preferably open in an axial direction and comprising a preferably cylindrical wall 22.

The head 17 further comprises two through slots 24 arranged diametrically opposite one another along the preferably cylindrical wall 22.

The tail 18 is shaped so as to laterally protrude with respect to the head 17 and define an inner housing seat 26, preferably open in an axial direction, for receiving the head 17 of the adjacent link.

Preferably, the inner seat 21 of the head 17 and the inner housing seat 26 of the tail 18 are connected.

The tail 18 is further provided with two lateral sides 28 substantially transverse to the planar surface 16 of the support portion 15.

Preferably, the sides 28 are substantially orthogonal to the planar surface 16.

Each side 28 comprises two abutment faces 29a 29b, which are shaped so as to cooperate with a respective tooth (not shown) of the sprocket (driving sprocket 5 or idle sprocket 8) of the handling device 1.

With reference to figure 6, the abutment faces 29a 29b of each side 28 are arranged so as not to face one another and are arranged so as to converge towards the outside of the chain 3.

The abutment faces 29a 29b of each side 28 define a meshing seat 30 for a respective tooth (not shown) of the sprocket (driving sprocket 5 or idle sprocket 8) of the handling device 1. The meshing seat 30 is substantially defined by the abutment face 29a of the tail 18 of a first link 10 and by the abutment face 29b of the tail of the link 10, whose head 17 is housed in the tail 18 of the first link 10. In other words, the meshing seat is substantially defined by the abutment faces of the tails of two consecutive links, wherein the head of one link is housed in the tail of the other.

Basically, when the links 10 are coupled to one another, the meshing seat 30 is generated.

Preferably, the abutment faces 29a 29b of each side 28 form different angles with the side portions adjacent to them so as to define converging walls, preferably at different inclinations.

An abutment face 29a is defined by the end portion of the side 28 of the tail 18, while an abutment face 29b is defined by the initial portion of the side 28 of the tail 18 (basically, the side portion 28 that defines "the widening" of the tail with respect to the head 17). In use, when the links 10 are coupled to one another, the abutment face 29a of one link 10 faces the abutment face 29b of the adjacent link to define the meshing seat 30.

In use, the tooth of the sprocket engages the meshing seat 30 and cooperates, by abutting against it, with at least one of the abutment faces 29a 29b to determine the traction of the chain 3.

The tooth cooperates, by abutting against it, with one abutment face 29a or with the other abutment face 29b depending on the direction of rotation and on the path along which the chain 3 is moving.

This configuration of the lateral sides 28 of the tail 18 allows for the creation of meshing seats 30 that guarantee a reliable tangential meshing in two directions.

Referring again to figures 4 and 5, each cardan-type joint 12 is configured to provide two rotational degrees of freedom: a first rotation axis P1 (preferably orthogonal to the moving direction D) and a second rotation axis P2 (orthogonal to the first rotation axis P1 and also preferably orthogonal to the moving direction D).

In a preferred embodiment, each joint 12 comprises a pin 33 and a pivot 34.

The pin 33 extends along the first rotation axis P1 and goes through the tail 18 of one link 10 and the head 17 of the adjacent link 10 that is housed in the inner housing seat 26.

In particular, the pin 33 goes through two diametrically opposite holes 35 of the tail 18 that lead to the inner housing seat 26.

The pivot 34 is hinged to the pin 33 and is housed in the inner seat 21 of the head 17. In particular, the pivot 34 is provided with an outer surface 36 comprising at least one cylindrical portion and is housed in the inner seat 21 of the head 17 so that the cylindrical portion of the outer surface 36 faces the cylindrical wall 22 of the inner seat 21.

In use, the pin 33 engages the slots 24 of the head 17. The dimensions of the slots 24 determine the degree of rotation of the pivot 34 around the second axis P2.

The rotation of the pivot 34 around the second axis P2 allows the chain 3 to adapt to straight and curved paths with small clearance and minimal noise.

The pivot 34 is preferably provided with a free base 37 provided with an inclined face 36, which, in use, is configured to cooperate, by abutting against them, against the teeth of the respective sprocket in case of radial meshing.

The arrangement of the links 10 and the cardan-type joints 12 guarantees a smooth and silent transmission of motion, even at high speeds

With reference to figure 3, the planar surface 16 defined by the support portion 15 is preferably shaped according to the so-called "Safety Finger" design, which reduces the open areas on the upper surface of the chain when the links 10 are coupled, thereby increasing safety for operators.

Basically, the planar surface 16 comprises a first edge 38 transverse to the extension axis A and to the moving direction D and a second edge 39 transverse to the extension axis A and to the moving direction D. The first edge 38 is shaped so as to have a shape substantially complementary to the second edge 39, so as to define a minimum free space between the first edge of one link 10 and the second edge of the adjacent link 10, when the links 10 are coupled to one another.

Preferably, the first edge 38 substantially subtends the head 17 of the articulation portion 14, whereas the second edge 39 substantially subtends the tail 18 of the articulation portion 14.

The second edge 39 is preferably shaped so as to define a curved portion 41, which is concave and sized so as to allow the head 17 to move when the chain 3 is moved along the path, and in particular when the chain 3 is bent into curved segments.

In the non-limiting example described and shown herein, the articulation portion 14 and the support portion 15 are manufactured as one single piece, preferably made of plastic material.

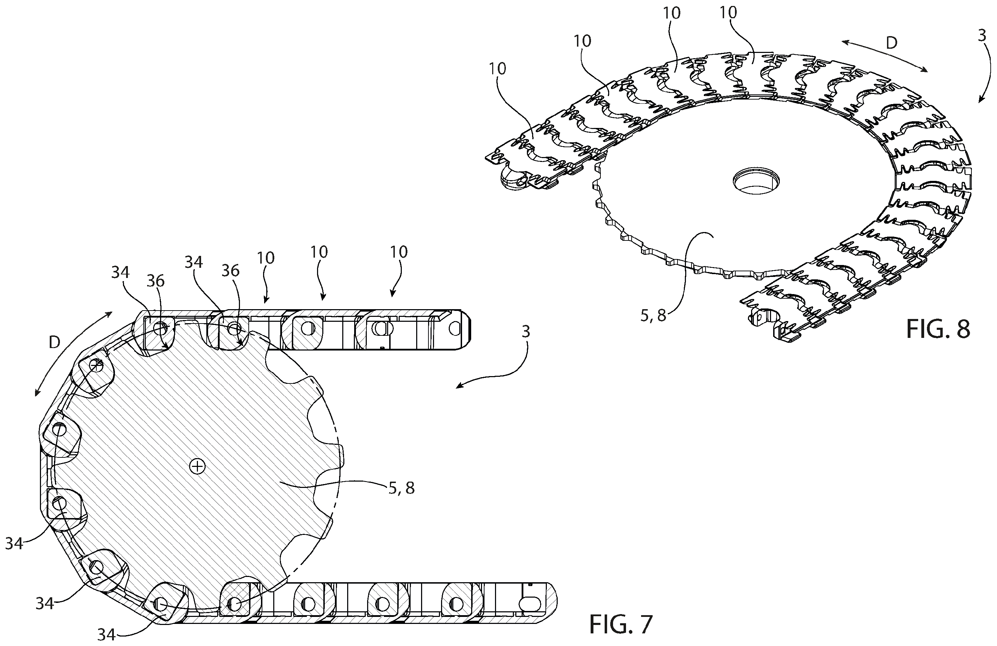

Figure 7 shows the chain 3 according to the invention in a radial meshing configuration of the sprocket (driving sprocket 5 or idle sprocket 8). In this configuration, the pivot 34 cooperates with the tooth of the sprocket to obtain the dragging of the chain 3. The tooth, in fact, enters the inner seat 21 of the head 17 and cooperates with the pivot 34.

Figure 8 shows the chain 3 according to the invention in a tangential meshing configuration of the sprocket (driving sprocket 5 or idle sprocket 8). In this configuration, as already pointed out, the tooth of the sprocket engages the meshing seat 30 defined by the two abutment faces 29a 29b to obtain the dragging of the chain 3.

Advantageously, the chain 3 according to the invention can be used in already existing handling devices and ensures stable, low-noise bidirectional operation.

The chain 3 and the handling device 1 disclosed above have a modular architecture that simplifies maintenance and allows for adaptation to different industrial configurations, with variations in the width of the link.

Finally, it is evident that the chain and the device disclosed and shown herein can be subjected to changes and variations, without going beyond the scope of protection of the invention defined in the appended claims.

## Claims

1. A closed-loop chain for handling material along a moving direction (D) comprising:
• a plurality of cardan-type joints (12);
• a plurality of links (10), each comprising:
- an articulation portion (14), configured to be coupled to the respective articulation portions (14) of the adjacent links (10) by means of respective cardan-type joints (12); and
- a support portion (15), which is integral to the respective articulation portion (14) and is configured to define a planar surface (16) for supporting the material (2) to be handled;
each articulation portion (14) extending along a longitudinal axis (A) and comprising a head (17) and a tail (18), which laterally protrudes with respect to the head (17) and defines an inner housing seat (26) shaped so as to house the head (17) of the articulation portion (14) of the adjacent link (10); the tail (18) being shaped so as to define two lateral sides (28) substantially transverse to the planar surface (16) of the support portion (15); each lateral side (28) being shaped so as to define a first and a second abutment face (29a, 29b) configured to cooperate, in use, with a tooth of a sprocket (5; 8) of a handling device (1).

2. The chain according to claim 1, wherein the first and the second abutment face (29a, 29b) of each lateral side (28) of the tail (18) do not face one another.

3. The chain according to claim 2, wherein the first and the second abutment face (29a, 29b) of each lateral side (28) of the tail (18) converge towards the outside of the chain (3).

4. The chain according to any one of the preceding claims, wherein a first abutment face (29a) is defined by the end portion of the side (28) of the tail (18) and a second abutment face (29b) is defined by the initial portion of the side (28) of the tail (18); in use, when the links (10) are coupled to one another, the abutment face (29a) of a link (10) faces the abutment face (29b) of the adjacent link (10) to define a meshing seat (30).

5. The chain according to any one of the preceding claims, wherein the longitudinal extension axis (A) substantially coincides, in use, with the moving direction (D).

6. The chain according to any one of the preceding claims, wherein the first and the second abutment face (29a, 29b) of each lateral side (28) are substantially orthogonal to the planar surface (16) of the support portion (15).

7. The chain according to any one of the preceding claims, wherein each cardan-type joint (12) is configured so as to define two rotational degrees of freedom around a first rotation axis (P1) and a second rotation axis (P2); the first and the second rotation axis (P1, P2) being orthogonal to the moving direction (D).

8. The chain according to claim 7, wherein the cardan-type joint (12) comprises:
- a pin (33), which extends along the first rotation axis (P1) and goes through the tail (18) of an articulation portion (14) and the head (17) of the adjacent articulation portion (14) housed in the tail (18);
- a pivot (34) housed in an inner seat (21) of the head (17) and hinged to the pin (33).

9. The chain according to claim 8, wherein the inner seat (21)of the head (17) is open and comprises a cylindrical wall (22); the pivot (34) being provided with an outer surface (36) comprising at least one cylindrical portion and being housed in the inner seat (21) of the head (17) so that the cylindrical portion of the outer surface (36) faces the cylindrical wall (22) of the inner seat (21).

10. The chain according to claim 8 or 9, wherein the pivot (34) can at least partly rotate around the second rotation axis (P2).

11. The chain according to any one of the claims from 8 to 10, wherein the head (17) is provided with two slots (24) arranged diametrically opposite one another and engaged by the pin (33).

12. The chain according to any one of the preceding claims, wherein the head (17) is provided with a substantially spherical outer surface (20).

13. The chain according to claim 12, wherein the planar surface (16) comprises a first edge (38) transverse to the extension axis (A) and to the moving direction (D) and a second edge (39) transverse to the extension axis (A) and to the moving direction (D); the first edge (38) being shaped so as to have a shape substantially complementary to the second edge (39), so as to define, in use, a minimum free space between the first edge of one link (10) and the second edge of the adjacent link (10).

14. A handling device for handling material comprising:
• at least one chain (3) according to any one of the preceding claims;
• at least one motor (6);
• at least one sprocket (5; 8) operated by the motor (6).

15. The handling device according to claim 14, wherein the sprocket is configured to rotate around an axis orthogonal to the transport plane (T) to which the planar surface (16) of the links (10) of the chain (3) belongs and comprises a plurality of teeth, each cooperating with at least one of the abutment faces (29a; 29b) to determine the traction of the chain (3).
